# DEMANDE DE BREVET EUROPEEN

(11) **EP 1 906 502 A2**
(43) Date de publication de la demande: **02.04.2008**
(21) Numéro de dépôt: 07117535.0
(22) Date de dépôt: 28.09.2007
(51) Int. Cl.: H02G 3/30

(54) **Crochet de securité**

(30) Priorité: 28.09.2006 US 848411 P
(71) Demandeur: PLAKABETON S.A., 1740 Ternat (BE)
(72) Inventeur: Michiels, Pierre, B-3080 Tervuren (BE)
(74) Mandataire: pronovem

(57) **Abrégé**

La présente invention se rapporte à un dispositif de crochet adapté à être attaché à un plafond pour former un support temporaire de câbles dans un bâtiment, ledit plafond comprenant un ou plusieurs éléments (4,5), par exemple des dalles, ledit dispositif comprenant une partie inférieure repliée (1) qui fait office de crochet de suspente, une partie intermédiaire (2), et une partie supérieure (6), ladite partie supérieure étant élargie ou pliée de sorte que le dispositif puisse s'implanter en prenant appui sur deux éléments de plafond ou s'ancrer dans un trou, ledit dispositif étant de préférence fabriqué dans un matériau fragile ou flexible.

## Description

### Objet de l'invention

La présente invention concerne le domaine de la construction, et plus particulièrement celui de la sécurité sur chantier, et encore plus particulièrement celui de la suspension temporaire de câbles ou tuyaux destinés au transport de courant électrique, d'air comprimé, d'eau, etc. qui sont disposés de façon temporaire par exemple au plafond de bâtiment en construction.

### Etat de la technique

La sécurité est un élément essentiel sur chantier et le monde de la construction connaît bien les problèmes liés au danger de la présence de conduites (câbles et tuyaux) sillonnant les planchers des ouvrages en construction. Une solution pour surmonter ces divers dangers est d'accrocher lesdites conduites sur les murs ou garde-corps du chantier. Cette solution présente toutefois l'inconvénient de rallonger fortement la longueur des conduites nécessaires et nécessite l'utilisation de divers moyens de fixation qui doivent correspondre au support concerné.

En présence de (pré-)dalles ou hourdis préfabriqués, une autre solution actuellement envisagée est de placer un crochet métallique entre les (pré-)dalles ou hourdis disposés sur les plafonds pour y suspendre lesdites conduites. Cette solution est relativement intéressante mais présente l'inconvénient qu'elle nécessite de découper en fin de chantier chaque crochet métallique au ras du plafond. Cette intervention doit être précise pour éviter qu'un morceau de crochet ne dépasse après la découpe ce qui prend du temps et est relativement coûteux. De plus, le fait qu'il subsiste certains éléments dudit crochet qui sont en acier sous les (pré-)dalles ou hourdis peut provoquer l'apparition de traces de corrosion dans les pièces humides par exemple.

### Buts de l'invention

La présente invention a pour but de réaliser un dispositif provisoire de suspension qui soit économique et facile à mettre en oeuvre et qui puisse être retiré très facilement ou cassé sans difficulté lorsqu'il n'est plus d'utilité. Il doit en plus supprimer le risque de corrosion.

### Principales caractéristiques essentielles de l'invention

La présente invention concerne un dispositif tel que décrit dans les revendications annexées.

Le dispositif de l'invention est caractérisé par le caractère provisoire de la fixation. Le dispositif a de préférence une forme de crochet (simple ou multiple) avec la partie supérieure élargie ou pliée de sorte qu'il puisse s'implanter en prenant appui sur deux éléments (par exemple deux pré-dalles ou deux hourdis préfabriqués) ou s'ancrer dans un trou réalisé en dalle pleine, passer l'épaisseur des éléments et former le crochet de suspension un peu en dessous des éléments. Il est alors possible de poser les canalisations dans les crochets et les suspendre ainsi en plafond. Le dispositif est réalisé dans un matériau, de préférence plastique ou fibre synthétique, relativement souple pour être déplié et retiré, ou relativement fragile pour être brisé par torsion, flexion ou cisaillement. La forme de la pièce et sa section ne sont pas des restrictions de la présente invention. De façon équivalente au cas ou le dispositif se met entre deux éléments de plafond, le dispositif peut dépasser un trou qui pèrce le béton complètement, en prenant appui sur les bords du trou.

### Brève description des figures

La figure 1 montre un dispositif selon une première forme d'exécution.

La figure 2 montre un dispositif selon une deuxième forme d'exécution.

La figure 3 montre un dispositif selon une troisième forme d'exécution.

La figure 4 montre un dispositif selon une quatrième forme d'exécution.

La figure 5 montre un dispositif selon une cinquième forme d'exécution.

La figure 6 montre un dispositif selon une sixième forme d'exécution.

La figure 7 montre différentes façons de démonter un dispositif selon l'invention.

### Description détaillée de plusieurs formes d'exécution selon l'invention

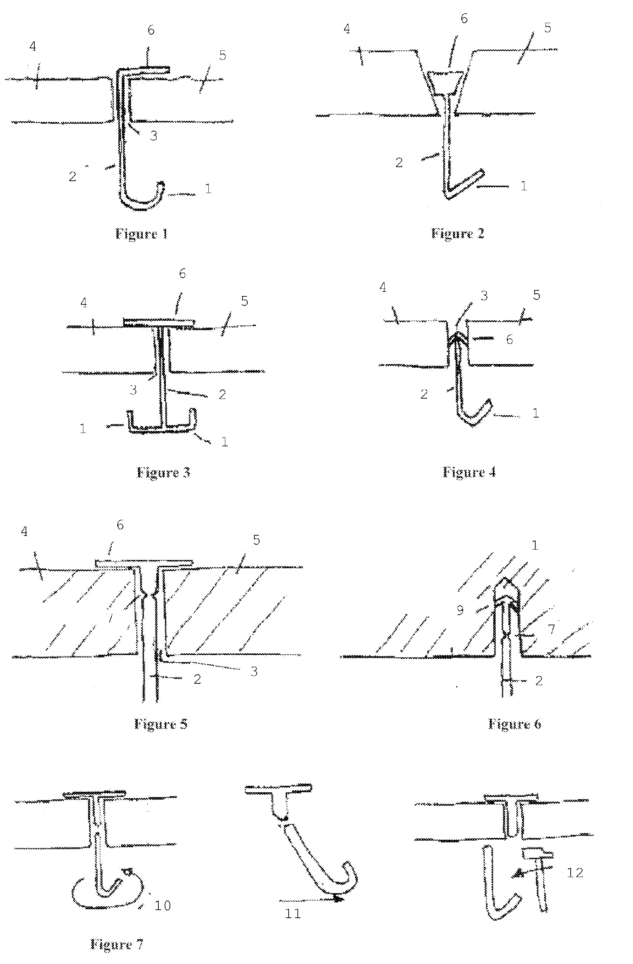

Les figures 1 à 4 montrent chacune un exemple de crochet selon l'invention. Une partie repliée 1 fait office de crochet de suspension, une partie 2 remonte dans le joint 3 entre deux éléments de plancher 4 et 5 et une partie 6 repliée ou élargie fait l'appui du dispositif sur les éléments de plancher 4 et/ou 5. Toutes les combinaisons des différentes parties du dispositif font partie de l'invention, sans limitation. Comme l'on voit sur les figures, la partie 2 forme une partie intermédiaire entre la partie de crochet inférieure 1 et la partie supérieure 6 repliée ou élargie.

Dans la forme d'exécution de la figure 1, le dispositif est essentiellement constitué d'un profil, dont deux parties repliées de façon adéquate forment respectivement la partie inférieure 1 et la partie supérieure 6.

Dans la forme d'exécution de la figure 2, la partie supérieure 6 est élargie de façon à former une partie ayant une section trapézoïdale. De préférence, la section trapézoïdale est essentiellement symétrique. Les côtés inclinés (non parallèles) de la section trapézoïdale vont prendre appui sur les côtés des deux dalles 4 et 5, de part et d'autre de la ligne médiane du joint 3 présent entre lesdites dalles. Les côtés ou parois latérales des dalles sont eux-mêmes biseautés (côtés inclinés). Le dispositif de la figure 2 pourrait également être utilisé dans un joint qui n'a pas de côtés biseautés. D'autres formes de sections de la partie supérieure 6 pourraient être utilisées dans le cadre de l'invention, par exemple des sections coniques ou cylindriques.

La forme d'exécution de la figure 3 est constituée d'une partie supérieure 6 qui forme une connexion en forme de 'T' avec la partie intermédiaire 2.
La partie inférieure comprend un double crochet.

La forme d'exécution de la figure 4 comprend une partie supérieure 6 en forme de flèche adaptée à être ancrée dans le joint 3 ou dans un trou ou orifice foré dans un élément de plafond.

La figure 5 montre une exécution préférentielle du dispositif. La partie 2 qui remonte dans le joint entre les éléments de plancher 4 et 5 présente une réduction de section 7 ou de résistance à hauteur de ces éléments de plancher. Ceci pour forcer la rupture à se produire dans cette section et s'assurer qu'aucune partie du dispositif ne reste visible. Le dispositif est donc fabriqué de sorte que la partie intermédiaire 2 comprend une zone 7 de résistance réduite, de préférence une zone de section réduite. Dans la forme d'exécution préférée, la zone de résistance réduite se trouve - quand le dispositif est installé - à l'intérieur du joint 3 ou à l'intérieur d'un trou.

La figure 6 montre une autre exécution selon l'invention, dans le cas ou le plancher est coulé en place. Un trou 8 est foré dans le plafond, le crochet est muni d'une extrémité 9 formant ancrage. Comme dans la figure 4, l'extrémité 9 est en forme de flèche.

La figure 7 montre les modes de ruptures préférentiels selon l'invention, par torsion 10, flexion 11 ou cisaillement 12 sans que ceci ne soit une quelconque restriction.

Les éléments caractéristiques de l'invention sont les suivants : il s'agit d'un dispositif provisoire de suspension en forme de crochet, réalisé par exemple dans un matériau relativement fragile pour qu'il puisse être cassé ou retiré sans difficulté lorsqu'on n'en a plus besoin.

## Revendications

1. Dispositif de crochet adapté à être attaché à un plafond pour former un support temporaire de câbles dans un bâtiment, ledit plafond comprenant un ou plusieurs éléments (4,5), par exemple des dalles, ledit dispositif comprenant une partie inférieure repliée (1) qui fait office de crochet de suspension, une partie intermédiaire (2), et une partie supérieure (6), ladite partie supérieure étant élargie ou pliée de sorte que le dispositif puisse s'implanter en prenant appui sur deux éléments de plafond (4,5) ou s'ancrer dans un trou (8) foré dans le plafond.

2. Le dispositif selon la revendication 1, **caractérisé en ce qu'**il est fabriqué en un matériau fragile ou flexible.

3. Le dispositif selon la revendication 1 ou 2, ledit dispositif étant fabriqué dans un matériau plastique ou fibre synthétique.

4. Le dispositif selon l'une quelconque des revendications 1 à 3, dans lequel la partie supérieure (6) est une partie repliée.

5. Le dispositif selon l'une quelconque des revendications 1 à 3, dans lequel la partie supérieure (6) a une forme de section trapézoïdale.

6. Le dispositif selon l'une quelconque des revendications 1 à 3, dans lequel la partie supérieure (6) est une partie en forme de flèche, adapté à être ancré dans un joint (3) entre deux éléments de plafond ou dans un trou.

7. Le dispositif selon l'une quelconque des revendications 1 à 3, dans lequel la partie supérieure (6) forme une connexion en forme de 'T' avec la partie intermédiaire (2).

8. Le dispositif selon l'une quelconque des revendications 1 à 3, dans lequel la partie intermédiaire (2) présente une zone (7) à résistance réduite.

9. Le dispositif selon la revendication 8, dans lequel la partie intermédiaire (2) présente une zone (7) à section réduite.

10. Le dispositif selon la revendication 8 ou 9, ledit dispositif étant adapté de sorte que - quand le dispositif est installé - la zone de résistance réduite (7) se trouve à l'intérieur du joint (3) entre deux éléments (4,5) ou à l'intérieur d'un trou.
